(19) Europäisches Patentamt / European Patent Office / Office européen des brevets

(11) **EP 3 392 308 A1**

(12) **EUROPEAN PATENT APPLICATION**
published in accordance with Art. 153(4) EPC

(43) Date of publication:
**24.10.2018 Bulletin 2018/43**

(51) Int Cl.:
*C08L 63/00* (2006.01)      *B29B 15/08* (2006.01)
*C08J 5/04* (2006.01)      *C08L 71/10* (2006.01)
*C08L 101/00* (2006.01)      *B29K 101/12* (2006.01)
*B29K 105/08* (2006.01)

(21) Application number: **16875428.1**

(22) Date of filing: **02.12.2016**

(86) International application number:
**PCT/JP2016/085907**

(87) International publication number:
**WO 2017/104445 (22.06.2017 Gazette 2017/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **17.12.2015 JP 2015246235**

(71) Applicant: **Toray Industries, Inc.**
**Tokyo 103-8666 (JP)**

(72) Inventors:
• **HIRANO, Masanori**
  **Nagoya-shi**
  **Aichi 455-8502 (JP)**
• **TOMIOKA, Nobuyuki**
  **Nagoya-shi**
  **Aichi 455-8502 (JP)**

(74) Representative: **Webster, Jeremy Mark**
**Mewburn Ellis LLP**
**City Tower**
**40 Basinghall Street**
**London EC2V 5DE (GB)**

(54) **BINDER RESIN COMPOSITION FOR PREFORM, BINDER PARTICLES, REINFORCED FIBER SUBSTRATE, PREFORM, AND FIBER-REINFORCED COMPOSITE MATERIAL**

(57)      A binder resin composition for a preform, having a Tg of 50°C to 100°C, a complex viscoelastic coefficient G* determined by dynamic viscoelasticity measurement of 10 kPa to 500 kPa at Tg + 30°C, and "G* at Tg + 30°C/G* at Tg + 80°C" of 10 to 300, wherein the viscosity monotonically decreases as temperature of the binder resin composition for a preform rises to 200°C. There are provided a binder resin composition that is excellent in storage stability at ordinary temperatures and adhesiveness between preform layers at low temperatures, and is capable of exhibiting stable adhesiveness even when the temperature during preform molding is uneven, as well as a reinforcing fiber base material, a preform, and a fiber reinforced composite material including the binder resin composition.

EP 3 392 308 A1

**Description**

TECHNICAL FIELD

The present invention relates to a binder resin composition used to manufacture a preform of a reinforcing fiber as well as binder particles, a reinforcing fiber base material, a preform, and a fiber reinforced composite material including the binder resin composition.

BACKGROUND ART

The use of a fiber reinforced composite material made from a reinforcing fiber and a matrix resin have been expanded to areas such as aerospace industry, sports industry, and other general industries, because the fiber reinforced composite material allows material design utilizing advantages of a reinforcing fiber and a matrix resin.

As the reinforcing fiber, a glass fiber, an aramid fiber, a carbon fiber, a boron fiber and the like are used. Though both a thermosetting resin and a thermoplastic resin are used as a matrix resin, a thermosetting resin is more frequently used because it easily impregnates into a reinforcing fiber. As the thermosetting resin, resin compositions such as an epoxy resin, an unsaturated polyester resin, a vinyl ester resin, a phenol resin, a bismaleimide resin, and a cyanate resin to which a curing agent or a curing catalyst is added are used.

Though fiber reinforced composite materials can be manufactured by various methods, an RTM (Resin Transfer Molding) method in which a liquid thermosetting resin is injected into a reinforcing fiber base material placed within a mold and heat cured to obtain a fiber reinforced composite material has been drawing attention as a method having excellent productivity at low costs.

When a fiber reinforced composite material is manufactured by the RTM method, it is often the case that a reinforcing fiber base material is first processed into a preform having a shape close to that of the desired product, and then the preform is placed in a mold, followed by injection of a liquid thermosetting resin.

As a method of producing a preform, several methods are known such as a method in which three-dimensional braids are produced from a reinforcing fiber and a method in which reinforcing fiber fabrics are stacked and stitched. As a highly versatile method, a method in which sheet-shaped base materials such as reinforcing fiber fabrics are stacked and shaped using a hot melt binder (a tackifier) is known.

Though, as a binder, a versatile high-molecular-weight epoxy resin can be used, there has been a problem that when a preform of a large member is molded as one piece, unevenness of temperature applied to the binder occurs depending on the place in a mold, resulting in insufficient adhesiveness in some parts of the produced preform.

Patent Document 1 discloses a binder resin composition containing a thermoplastic resin and an epoxy resin and having excellent adherence with a reinforcing fiber.

Patent Document 2 discloses a binder resin composition allowing high cycle performance of a preform in a mold having a constant temperature. The binder resin composition contains a combination of an epoxy resin such as a liquid bisphenol A epoxy resin and a thermoplastic resin with a curing catalyst such as imidazole, and has curing reactivity.

Patent Documents 3 and 4 disclose a composition containing a thermosetting resin and a thermoplastic resin and having controlled viscosity properties.

PRIOR ART DOCUMENTS

PATENT DOCUMENTS

Patent Document 1: Japanese Patent Laid-open Publication No. 2005-194456
Patent Document 2: WO2014/007288
Patent Document 3: Japanese Patent Laid-open Publication No. 2009-235182
Patent Document 4: WO2013/117308

SUMMARY OF THE INVENTION

PROBLEMS TO BE SOLVED BY THE INVENTION

When a preform is produced using the binder disclosed in Patent Document 1, though the unevenness of adhesiveness can be resolved by heating of a mold to high temperatures, the binder needs to be heated to high temperatures to be melted, and thus is poor in terms of high cycle performance and energy costs.

The binder resin composition shown in Patent Document 2 cannot resolve the unevenness of adhesiveness in a preform of a large member and has poor storage stability because of possible progress of reaction during storage.

Further, the binder composition disclosed in Patent Document 3 has poor storage stability at ordinary temperatures because of the low Tg of the binder.

The binder composition disclosed in Patent Document 4 has poor storage stability at ordinary temperatures because of the low Tg of the binder composition, and also has poor adhesiveness.

An object of the present invention is to remedy defects of the conventional techniques, and provide a binder resin composition that is excellent in storage stability at ordinary temperatures and adhesiveness between preform layers at low temperatures and is capable of exhibiting stable adhesiveness even when the temperature during preform molding is uneven, as well as a reinforcing fiber base material, a preform, and a fiber reinforced composite material including the binder resin composition.

SOLUTIONS TO THE PROBLEMS

The present invention, which aims to solve the above-mentioned problems, is as follows.

A binder resin composition for a preform, having a Tg of 50°C to 100°C, a complex viscoelastic coefficient G* determined by dynamic viscoelasticity measurement of 10 kPa to 500 kPa at Tg + 30°C, and "G* at Tg + 30°C/G* at Tg + 80°C" of 10 to 300, wherein the G* monotonically decreases as temperature of the binder resin composition for a preform rises in a range of 0 to 200°C.

The present invention includes binder particles made from the binder resin composition for a preform.

The present invention includes a binder-attached reinforcing fiber base material including a reinforcing fiber base material, and the binder resin composition for a preform on at least one surface of the reinforcing fiber base material.

The present invention includes a preform including a laminate of the at least one binder-attached reinforcing fiber base material.

The present invention includes a fiber reinforced composite material made from the preform and a cured thermosetting resin.

EFFECTS OF THE INVENTION

According to the present invention, a binder resin composition for a preform that is excellent in storage stability at ordinary temperatures can be obtained, a preform that is excellent in adhesiveness at low temperatures can be produced, and further, stable adhesiveness can be exhibited even when the temperature during preform molding is uneven.

EMBODIMENTS OF THE INVENTION

Desirable embodiments of the present invention are described below.

The binder resin composition for a preform according to the present invention has a Tg of 50°C to 100°C, a complex viscoelastic coefficient G* determined by dynamic viscoelasticity measurement of 10 kPa to 500 kPa at Tg + 30°C, and "G* at Tg + 30°C/G* at Tg + 80°C" of 10 to 300, and the G* monotonically decreases as temperature of the binder resin composition for a preform rises in a range of 0 to 200°C.

Due to the Tg and the rheological properties of the binder resin composition, a preform that is excellent in storage stability at ordinary temperatures and adhesiveness at low temperatures can be produced, and stable adhesiveness can be exhibited even when the temperature during preform molding is uneven.

The binder resin composition for a preform according to the present invention has a Tg of 50 to 100°C, preferably 50 to 80°C. The Tg of the binder resin composition is an important value for storage stability of a binder made from the resin composition. When the Tg is less than 50°C, the storage stability of the binder resin composition for a preform at ordinary temperatures is insufficient. Meanwhile, when the Tg is higher than 100°C, the binder resin composition needs to be heated at high temperatures to be melted, making the binder resin composition poor in terms of high cycle performance and energy costs.

The glass transition temperature Tg of the binder resin composition can be determined by the dynamic viscoelasticity measurement. As the instrument for the dynamic viscoelasticity measurement, for example, ARES-G2 (manufactured by TA Instruments) can be used. A resin sample is set on a parallel plate of 8 mm, and the temperature of the resin sample is raised at a rate of 5°C/min in the temperature range of 0 to 200°C, while a traction cycle of 0.5 Hz is applied, to measure a complex viscoelastic coefficient G*. In a graph having the logarithm of the obtained G* on the vertical axis and the temperature on the horizontal axis, the Tg is defined as the temperature at the intersection of the tangent of the glass region and the tangent on the inflection point of the glass transition region. Here, when a plurality of inflection points of the glass transition region exists, the inflection point at the lowest temperature is used.

The complex viscoelastic coefficient G* determined by dynamic viscoelasticity measurement of the binder resin composition for a preform according to the present invention needs to be 10 kPa to 500 kPa at Tg + 30°C, and it is preferably 10 kPa to 300 kPa. Here, the temperature Tg + 30°C is a temperature to melt the binder resin composition at relatively low temperatures, and the value of the G* is an index value showing whether the binder resin composition appropriately melts and provides adhesiveness between preform layers, i.e., between reinforcing fiber base materials during preform molding at the temperature or not. When the G* is less than 10 kPa at Tg + 30°C, the binder resin composition penetrates the reinforcing fiber, and cannot exhibit sufficient adhesiveness. Meanwhile, when the G* is more than 500 kPa at Tg + 30°C, the binder resin composition does not melt sufficiently, resulting in poor adhesiveness. When the adhesiveness between preform layers is low, the influence of the unevenness of the temperature during preform molding is significant.

The ratio of G* at Tg + 30°C to G* at Tg + 80°C (G* at Tg + 30°C/G* at Tg + 80°C) of the binder resin composition for a preform of the present invention needs to be 10 to 300, and it is more preferably 10 to 200. The ratio of G* at Tg + 30°C to G* at Tg + 80°C is a value showing the magnitude of influence of temperature change on the G* in a melted binder resin composition for a preform. When the ratio is less than 10, the binder resin composition tends to be rubbery, resulting in insufficient adhesiveness to the reinforcing fiber base material. Meanwhile, when the ratio is more than 300, the influence of the unevenness of the temperature during preform molding is significant, resulting in insufficient adhesiveness in some parts of the preform.

The G* of the binder resin composition for a preform of the present invention monotonically decreases as temperature of the binder resin composition for a preform rises in a range of 0 to 200°C. This means that the binder resin composition has substantially no curing reactivity by itself. When the G* does not monotonically decrease as temperature of the binder resin composition for a preform rises in a range of 0 to 200°C, the storage stability of the binder is insufficient. Here, "the G* monotonically decreases as temperature of the binder resin composition for a preform rises in a range of 0 to 200°C" means that there is no region where the G* rises or the G* is constant when the temperature of the binder resin composition for a preform rises in a range of 0°C to 200°C. "Monotonically decreases" does not mean that the G* constantly decreases at a constant speed, but means that the G* continues to decrease at some speed as temperature of the binder resin composition for a preform rises in a range of 0°C to 200°C.

The binder resin composition for a preform according to the present invention preferably contains the following components [A] and [B] to achieve the Tg and the rheological properties of the binder resin composition for a preform.

Component [A]: an epoxy resin
Component [B]: a thermoplastic resin that is soluble in the component [A]

The component [A] is preferably an epoxy resin having a Tg of 30 to 80°C. The component [A], an epoxy resin, is preferably used in terms of the adhesiveness to the reinforcing fiber base material and the affinity to a matrix resin in a fiber reinforced composite material, and in addition, to adjust the Tg of the binder resin composition for a preform, i.e. to control the Tg of the binder resin composition for a preform in a range of 50 to 100°C.

Examples of the epoxy resin which can be used include aromatic glycidyl ethers obtained from a phenol having a plurality of hydroxy groups, aliphatic glycidyl ethers obtained from an alcohol having a plurality of hydroxy groups, glycidyl amines obtained from amines, glycidyl esters obtained from a carboxylic acid having a plurality of carboxyl groups, and alicyclic epoxy resins obtained by the oxidation of olefins.

As an epoxy resin, a solid epoxy resin preferably having a Tg of 30 to 80°C, more preferably having a Tg of 40 to 80°C is preferably used. When a liquid or semisolid epoxy resin is used, a large amount of a thermoplastic resin needs to be added to secure the storage stability of the binder resin composition, and thus, the binder resin composition may not melt during preform molding at low temperatures, resulting in low adhesiveness. Here, the liquid or semisolid epoxy resin means an epoxy resin having a Tg less than 30°C and having a liquid or semisolid form at ordinary temperatures. Meanwhile, when an epoxy resin having a Tg higher than 80°C is used, the Tg of the binder resin composition tends to be high, which may also result in low adhesiveness in preform molding at low temperatures.

The Tg of an epoxy resin can be determined by dynamic viscoelasticity measurement using the technique same as the technique for determining the Tg of the binder resin composition for a preform.

When the component [A], an epoxy resin, in the binder resin composition is composed of a plurality of epoxy resins, the Tg of the mixture produced by mixing of the plurality of epoxy resins in the ratio same as the ratio in the binder resin composition is preferably 30 to 80°C, more preferably 40 to 80°C.

Further, as a preferred epoxy resin of the component [A], a bisphenol epoxy resin is preferably used in terms of adhesiveness. Examples of such a bisphenol epoxy resin which can be used include, without specific limitation, a bisphenol A epoxy resin, a bisphenol F epoxy resin, a bisphenol S epoxy resin, a bisphenol E epoxy resin, a bisphenol Z epoxy resin, and an alkyl substitution product, a halogen substitution product, and a hydrogenated product thereof.

In particular, the component [A] preferably includes a bisphenol epoxy resin having an epoxy equivalent of 500 to 3500, and more preferably includes a bisphenol epoxy resin having an epoxy equivalent of 500 to 2000 in terms of storage stability and adhesiveness. When the epoxy equivalent is less than 500, a large amount of a thermoplastic resin needs to be added to secure the storage stability, which may result in low adhesiveness in preform molding at low temperatures. Meanwhile, when the epoxy equivalent is more than 3500, the binder resin composition may not melt during preform molding at low temperatures, resulting in low adhesiveness.

Here, an epoxy equivalent means a value calculated by division of the mass (g) of an epoxy resin by the number of moles of all epoxy groups contained in the resin. When the epoxy resin is composed of a plurality of epoxy resins, the epoxy equivalent can be quantified by direct titration of the mixture of the epoxy resins according to JIS K7236 (2009). When the epoxy equivalent of each epoxy resin component and the amount of each epoxy resin component contained in the resin are known, the epoxy equivalent can be determined by calculation.

The component [A] is preferably contained at a ratio of 30 to 95% by mass, and is more preferably contained at a ratio of 50 to 95% by mass in 100% by mass of the binder resin composition for a preform. When the content of the component [A] in 100% by mass of the binder resin composition is less than 30% by mass, the adhesiveness to the reinforcing fiber base material and the affinity to the matrix resin may decrease. When the content of the component [B] in 100% by mass of the binder resin composition is more than 95% by mass, the adhesive strength between preform layers may decrease.

The component [B] (a thermoplastic resin that is soluble in the component [A]) in the present invention is preferably used to achieve the adhesiveness to the reinforcing fiber and the stable adhesiveness between preform layers even when the temperature during preform molding is uneven.

Here, "the component [B] is soluble in the component [A]" means that when 90% by mass of the component [A] and 10% by mass of the component [B], a thermoplastic resin, are heated and stirred at 180°C to uniformly mix and then cooled to room temperature, phase separation of the mixture is not observed under a 400 x optical microscope.

Examples of the component [B] include, without specific limitation, components that are soluble in the component [A] among polyamides, polycarbonates, polyacetals, polyphenylene oxide, polyphenylene sulfide, polyallylate, polyesters, polyamide-imide, polyimides, polyetherimide, polyimides having a phenyl trimethyl indane structure, polysulfone, polyether sulfone, polyether ketone, polyether ether ketone, polyaramide, polyether nitrile, polybenzimidazole, polyurethanes, a urea resin, polyvinyl pyrrolidone, polyvinyl acetal, polyvinyl formal, polyvinyl alcohol, and a phenoxy resin.

In particular, the component [B] is preferably a phenoxy resin. When a phenoxy resin is used as the component [B], the phenoxy resin is easily integrated with the epoxy resin preferably used as a matrix resin, and thus the physical properties of the obtained molded product are excellent. The weight-average molecular weight of the phenoxy resin is preferably in a range of 10,000 to 2,000,000. The weight-average molecular weight is more preferably 45,000 or more, further preferably 70,000 or more. The weight-average molecular weight is more preferably 1,500,000 or less. When the weight-average molecular weight of the phenoxy resin is less than 10,000, the adhesiveness may decrease. When the weight-average molecular weight is more than 2,000,000, the binder resin composition tends not to melt, which may result in poor adhesiveness to the reinforcing fiber base material.

Meanwhile, the component [B] is preferably one or more resins selected from the group consisting of polyetherimide, polysulfone, polyether sulfone, polyether ketone, polyether ether ketone, polyvinyl pyrrolidone, polyvinyl acetal, polyvinyl formal, and polyvinyl alcohol in terms of impregnating ability of the matrix resin into a preform. The weight-average molecular weights of these resins are preferably in a range of 10,000 to 2,000,000. The weight-average molecular weights are more preferably 45,000 or more. The weight-average molecular weights are more preferably 1,500,000 or less. The weight-average molecular weight of the component [B] has an influence on the rate of change of the G* in response to the temperature of the binder resin composition for a preform. When the weight-average molecular weight of the component [B] is less than 10,000, the binder resin composition tends to penetrate the reinforcing fiber base material during preform molding at high temperatures, which may result in insufficient adhesive strength and unevenness of adhesiveness in the preform. Meanwhile, when the weight-average molecular weight is more than 2, 000, 000, the binder resin composition tends not to melt, which may result in poor adhesiveness to the reinforcing fiber base material.

When the binder resin composition prepared using the above-mentioned thermoplastic resin as the component [B] is used, the compatibility between the binder resin composition and the matrix resin during the impregnation of a preform with the matrix resin will be appropriate. When the binder resin composition is too compatible with the matrix resin, the viscosity of the matrix resin increases during injection, which may result in the decrease of the impregnating ability. Meanwhile, when the binder resin composition is poorly compatible with the matrix resin, the binder resin composition remains in the molded product as a contaminant, which may result in the deterioration of the physical properties of the molded product.

The component [B] is preferably contained at a ratio of 5 to 50% by mass, and is more preferably contained at a ratio of 5% by mass or more and less than 30% by mass in 100% by mass of the binder resin composition for a preform to achieve a complex viscoelastic coefficient G* determined by dynamic viscoelasticity measurement of the binder resin composition for a preform of 10 kPa to 500 kPa at Tg + 30°C and a ratio of G* at Tg + 30°C to G* at Tg + 80°C of 10 to 300. When the content of the component [B] in 100% by mass of the binder resin composition is less than 5% by mass, flow optimization in preform molding is insufficient, and thus, adhesive strength may be insufficient due to the unevenness of the temperature during preform molding. When the content of the component [B] in 100% by mass of the binder resin composition is more than 50% by mass, adherence at low temperatures may decrease.

The weight-average molecular weight in the present invention can be measured by gel permeation chromatography (GPC) . For example, a polymer to be measured is dissolved in tetrahydrofuran so that the concentration of the polymer is 0.1% by weight to obtain a sample solution. To Into two columns of Shodex 80M (manufactured by SHOWA DENKO K.K.) and one column of Shodex 802 (manufactured by SHOWA DENKO K.K.), 0.3 $\mu$L of the obtained sample solution is injected, and the retention time of the sample measured at a flow rate of 1 mL/min is converted to a molecular weight using the retention time of a calibration sample of polystyrene to calculate the weight-average molecular weight.

The Tg of the component [B] is preferably 80 to 180°C, more preferably 80 to 150°C to achieve the above-mentioned rheological properties of the binder resin composition for a preform. When the Tg of the component [B] is less than 80°C, the storage stability of the binder resin composition may be insufficient. Meanwhile, when the Tg of the component [B] is higher than 180°C, sufficient adhesiveness may not be obtained at low temperatures.

When the binder resin composition for a preform contains a curing catalyst, the binder resin composition for a preform has curing reactivity, and thus, the G* does not monotonically decrease as temperature of the binder resin composition for a preform rises in a range of 0 to 200°C. In such a case, curing reaction of the binder resin composition proceeds during storage, and the binder particles do not melt at the preform molding temperature during molding. Therefore, the binder resin composition for a preform preferably contains no curing catalyst.

The form of the binder resin composition for a preform of the present invention is not specifically limited, and examples of the form include film, tape, long fiber, short fiber, spun yarn, fabric, knit, nonwoven fabric, net, and particle forms. Of these, a particle form is particularly preferably used. Hereinafter, a binder resin composition in the form of particles is also referred to as binder particles.

When the form of the binder resin composition for a preform is a particle form, the average particle size of the particles is preferably 10 to 1000 $\mu$m. Here, the average particle size refers to the volume average particle diameter. When the average particle size is less than 10 $\mu$m, the adhesive strength and workability may decrease. When the average particle size is more than 1000 $\mu$m, undulation of the reinforcing fiber in the preform may occur, leading to deterioration of mechanical properties of the fiber reinforced composite material, or particles cannot be easily dissolved in a liquid thermosetting resin, leading to decreased heat resistance and chemical resistance.

The average particle size of the binder particles can be measured using, for example, a laser diffraction type particle size distribution analyzer.

The binder resin composition for a preform of the present invention is used in a state in which the binder resin composition for a preform is attached to a reinforcing fiber base material. That is, the binder-attached reinforcing fiber base material of the present invention has the binder resin composition for a preform on at least one surface of the reinforcing fiber base material.

Examples of the reinforcing fiber used in the reinforcing fiber base material include carbon fibers, glass fibers, aramid fibers, metal fibers, and combinations thereof. Of these, carbon fibers can be preferably used because they are light and strong.

The reinforcing fiber may be a short fiber, a continuous fiber, or a combination thereof. The continuous fiber is preferred to obtain a fiber reinforced composite material with high Vf.

The forms of the reinforcing fiber base material preferably used include a strand, a mat, a fabric, a knit, a braid, and a one-direction sheet. Of these, a fabric is preferably used because it contributes to easy obtainment of a fiber reinforced composite material with high Vf and has excellent handleability.

As the weave of a fabric, a plain weave fabric, a sateen weave fabric, a twill weave fabric, a non-crimp cloth or the like is appropriately selected. When weave textures of the reinforcing fiber are shown in the design surface of the obtained fiber reinforced composite material by clear coating, a plain weave and a twill weave contribute to high designability. Fabrics of a sateen weave and a twill weave have good drape properties, and thus, are preferably used to shape a three-dimensional shape with a large depth.

The ratio of the net volume of a reinforcing fiber to the apparent volume of a fabric is defined as a filling factor of the fabric. The filling factor of a fabric is calculated by the formula W/ (1000 t·$\rho$f) where W (unit: g/m$^2$) is mass per unit area, t (unit: mm) is thickness, and pf (unit: g/cm$^3$) is density of the reinforcing fiber. The mass per unit area and thickness of a fabric are determined according to JIS R 7602 (1995) . When the filling factor of a fabric is high, a fiber reinforced composite material with high Vf can be easily obtained, and thus, the filling factor of a fabric is preferably in a range of 0.10 to 0.85, more preferably 0.40 to 0.85, further preferably 0.50 to 0.85.

The volume fraction of fiber Vf is preferably in a range of 40 to 85%, more preferably 45 to 85% to achieve a high specific strength or a high specific modulus of the obtained fiber reinforced composite material. The volume fraction of fiber Vf of the fiber reinforced composite material as used herein is a value defined below and measured according to ASTM D3171 (1999), and the value is determined after a liquid thermosetting resin is injected into a reinforcing fiber base material and cured. That is, the volume fraction of fiber Vf of a fiber reinforced composite material can be calculated using Formula 1 below from the thickness h of the fiber reinforced composite material.

$$\texttt{Volume fraction of fiber Vf (\%) = (Af} \times \texttt{N)/(\rho f} \times$$

$$\texttt{h)/10 ...(Formula 1)}$$

Af: mass per $m^2$ of a sheet of a reinforcing fiber base material $(g/m^2)$
N: number of stacked reinforcing fiber base materials (number)
pf: density of reinforcing fiber $(g/cm^3)$
h: thickness of a fiber reinforced composite material (a specimen) (mm)

If the mass per $m^2$ of a sheet of a reinforcing fiber base material Af, the number of stacked reinforcing fiber base materials N, or the density of reinforcing fiber pf is unknown, the volume fraction of fiber of the fiber reinforced composite material is calculated by any of the combustion method, nitric acid decomposition method, or sulfuric acid decomposition method according to JIS K 7075 (1991). The density of the reinforcing fiber used for this calculation is measured according to JIS R 7603 (1999).

When the binder resin composition for a preform of the present invention is attached to at least one surface of the reinforcing fiber base material, the binder resin composition for a preform is preferably attached to at least one surface at a mass per unit area of 0.5 to 30 $g/m^2$, preferably 1 to 10 $g/m^2$. When the mass per unit area is less than 0.5 $g/m^2$, the effect of fixation of the form and toughness increase is small. When the mass per unit area is more than 30 $g/m^2$, the apparent volume of the reinforcing fiber strand or the reinforcing fiber base material is large, leading to disadvantages such as difficulty in manufacturing of a fiber reinforced composite material with a large volume fraction of reinforcing fiber and poor impregnating ability of a thermosetting resin.

The preform of the present invention is a laminate of the at least one binder-attached reinforcing fiber base material of the present invention. More specifically, the preform of the present invention is a preform obtained by stacking the reinforcing fiber base materials each having the binder resin composition on at least one surface thereof and fixing the form of the laminate. The binder-attached reinforcing fiber base material includes a reinforcing fiber base material and the binder resin composition for a preform attached to at least one surface of the reinforcing fiber base material. Normally, a plurality of the binder-attached reinforcing fiber base materials are stacked and heated to cure the binder resin composition, leading to adherence between the reinforcing fiber base materials and resulting fixation of the form.

The preform can be produced by cutting reinforcing fiber base materials in a sheet form to which a binder resin composition is attached each into a predetermined shape, stacking the sheets on a mold, and applying appropriate degrees of heat and pressure. Pressure can be applied using a press, and it is also possible to employ a method of applying pressure by atmospheric pressure in which the preform is enclosed with vacuum bag film followed by aspiration of air inside the film with a vacuum pump.

The fiber reinforced composite material of the present invention is made from the preform of the present invention and a cured thermosetting resin. That is, the fiber reinforced composite material can be produced by impregnation of the preform containing the binder resin composition for a preform of the present invention with a liquid thermosetting resin followed by curing of the liquid thermosetting resin.

The manufacturing method of the fiber reinforced composite material is not specifically limited, and molding methods in which a two-component resin is used, such as a hand lay-up method and an RTM method are preferably used. Of these, in particular, the RTM molding method is preferably used in terms of productivity and the degree of freedom of shape of the molded product. In the RTM molding method, a liquid thermosetting resin is injected into the reinforcing fiber base material placed in a mold and cured to obtain a reinforced fiber composite material.

The liquid thermosetting resin contains a liquid resin mainly containing monomer components and a curing agent or curing catalyst that three-dimensionally crosslinks monomer components to form a polymer.

The liquid resin is preferably an epoxy resin in terms of reactivity and compatibility with the binder resin composition for a preform of the present invention.

Specific examples of the epoxy resin include aromatic glycidyl ethers obtained from a phenol having a plurality of hydroxy groups, aliphatic glycidyl ethers obtained from an alcohol having a plurality of hydroxy groups, glycidyl amines obtained from amines, glycidyl esters obtained from a carboxylic acid having a plurality of carboxyl groups, and epoxy resins having an oxirane ring.

Suitable curing agents include aliphatic polyamines, aromatic polyamines, acid anhydrides, imidazole, and Lewis acid complexes, from which an appropriate resin is selected depending on the intended use.

The liquid thermosetting resin is injected into a mold, and then heat cured. Though the temperature of the mold at heat curing may be the same as the temperature of the mold at the injection of the liquid thermosetting resin, a higher temperature than the temperature of the mold at the injection is preferably selected, and, for example, the temperature is preferably in a range of 60 to 180°C. This is because curing at low temperatures may require long time for advancing the curing reaction to such a degree of rigidity that the deformation of the fiber reinforced composite material is prevented during removal from the mold.

EXAMPLES

The present invention will be described in more detail below with reference to examples.

<Resin material>

The following resin materials were used to obtain resin compositions of examples . The unit of the contents in the resin compositions in the tables is "% by mass", unless otherwise specified.

Epoxy resin

- YD-128 (manufactured by Nippon Steel & Sumikin Chemical Co., Ltd.): bifunctional bisphenol A epoxy resin, liquid, epoxy equivalent = 189
- "jER" (registered trademark) 834 (manufactured by Mitsubishi Chemical Corporation): bifunctional bisphenol A epoxy resin, semisolid, epoxy equivalent = 250
- "jER" (registered trademark) 1001 (manufactured by Mitsubishi Chemical Corporation): bifunctional bisphenol A epoxy resin, Tg = 35°C, epoxy equivalent = 475
- "jER" (registered trademark) 1004 (manufactured by Mitsubishi Chemical Corporation): bifunctional bisphenol A epoxy resin, Tg = 57°C, epoxy equivalent = 975
- "jER" (registered trademark) 1007 (manufactured by Mitsubishi Chemical Corporation): bifunctional bisphenol A epoxy resin, Tg = 76°C, epoxy equivalent = 1925
- "jER" (registered trademark) 1010 (manufactured by Mitsubishi Chemical Corporation): bifunctional bisphenol A epoxy resin, Tg = 82°C, epoxy equivalent = 4000
- "EPICLON" (registered trademark) N-695 (manufactured by DIC Corporation): cresol novolac epoxy resin, Tg = 58°C Thermoplastic resin
- YP-50 (manufactured by Nippon Steel & Sumikin Chemical Co., Ltd.): phenoxy resin, weight-average molecular weight 70,000, Tg = 88°C
- YP-55 (manufactured by Nippon Steel & Sumikin Chemical Co., Ltd.): phenoxy resin, weight-average molecular weight 47,500, Tg = 86°C
- PKHH (manufactured by InChem): phenoxy resin, weight-average molecular weight 42,600, Tg = 88°C
- "Vinylec" (registered trademark) K (manufactured by CHISSO CORPORATION): polyvinyl formal, weight-average molecular weight 47300, Tg = 90
- Sumikaexcel (registered trademark) PES5003P (manufactured by Sumitomo Chemical Co., Ltd.): polyether sulfone, weight-average molecular weight 47000, Tg = 225°C
- "ULTEM" (registered trademark) 1010 (manufactured by SABIC): polyetherimide, weight-average molecular weight 41000, Tg = 217°C
- polyvinyl pyrrolidone K15 (manufactured by Tokyo Chemical Industry Co., Ltd.): polyvinyl pyrrolidone resin, weight-average molecular weight 10,500, Tg = 130°C
- polyvinyl pyrrolidone K30 (manufactured by Tokyo Chemical Industry Co., Ltd.): polyvinyl pyrrolidone resin, weight-average molecular weight 60,0000, Tg = 170°C
- polyvinyl pyrrolidone K90 (manufactured by Tokyo Chemical Industry Co., Ltd.): polyvinyl pyrrolidone resin, weight-average molecular weight 1,350,000, Tg = 174°C
- "Grilamid" (registered trademark) TR-55, (manufactured by EMSER WERKE, Inc.) polyamide resin, weight-average molecular weight 18,000, Tg = 160°C

Curing catalyst

• "Curezol" (registered trademark) 2E4MZ (manufactured by SHIKOKU CHEMICALS CORPORATION): 2-ethyl-4methyl imidazole

<Preparation of binder resin composition>

An epoxy resin, a thermoplastic resin, and a curing catalyst according to the materials and compounding ratios shown in Tables 1 to 3 were heated and stirred at 180°C for 1 hour to uniformly mix to prepare a binder resin composition for a preform. When the binder resin composition for a preform contained a curing catalyst, the binder resin composition for a preform was prepared under conditions in which curing reaction do not substantially proceed.

<Measurement of Tg of epoxy resin, Tg of resin composition, and complex viscoelastic coefficient G*>

The complex viscoelastic coefficient G* was determined by dynamic viscoelasticity measurement using the epoxy resin or resin composition as a sample. ARES-G2 (manufactured by TA Instruments) was used as a measuring instrument. A resin sample was set on a parallel plate of 8 mm, and the complex viscoelastic coefficient G* was measured at a rate of temperature rise of 5°C/min in the temperature range of 0 to 200°C while a traction cycle of 0.5 Hz was applied. In a graph having the logarithms of the obtained G*s on the vertical axis and temperatures on the horizontal axis, the temperature at the intersection of the tangent of the glass region and the tangent on the inflection point of the glass transition region was determined as a Tg.

<Production of binder particles>

The prepared binder resin composition for a preform was freeze-crushed using a screen with a pore size of 1 mm and liquid nitrogen in a hammer mill (Pulverizer, manufactured by Hosokawa Micron Corporation) to obtain particles. The obtained particles were passed through a sieve with an opening size of 212 μm to remove coarse particles, whereby binder particles for a preform were obtained.

<Storage stability evaluation of binder particles>

After the produced binder particles for a preform were allowed to stand at 40°C for 1 month, the particles were evaluated as follows. If the binder particles had no aggregation nor fusion between the particles and the G* determined by the above method (i.e., the method described in the section of <Measurement of Tg of epoxy resin, Tg of resin composition, and complex viscoelastic coefficient G*>) monotonically decreased as the temperature of the particles rose in a range of 0 to 200°C, the particles were evaluated as good. If the binder particles had aggregation and/or fusion between the particles or the G* determined by the above method of temperature rise did not monotonically decrease, the particles were evaluated as bad.

<Production of preform>

The binder particles produced as described above were spread over one surface of a carbon fiber fabric ("TORAYCA (registered trademark)" cloth C06343, carbon fiber: T300-3K, weave: plain weave, mass per unit area: 198 g/m$^2$, manufactured by Toray Industries Inc.) at a spread amount of 6 g/m$^2$, and then the surface was heated using a far-infrared heater to obtain a binder-attached reinforcing fiber base material. Two binder-attached reinforcing fiber base materials were stacked and heated for 30 seconds at a molding temperature of Tg + 30°C of the binder particles used under a pressure of 50 kPa to produce a preform.

<Adhesive strength evaluation of preform>

A peeling test between the reinforcing fiber base materials of a preform produced as described above was performed. The test was performed using Instron universal tester (manufactured by Instron) according to JIS K6854 (1977). The produced preform was cut into a specimen with a length of 150 mm (100 mm at the attached part) and a width of 25 mm. Five specimens were used for the same test, and the average was used as the test results. The peeling speed was 50 mm/min.

<Evaluation of influence of unevenness of temperature during preform molding>

The preform was evaluated as good if the ratio of the adhesive strength value of the preform produced at a molding temperature of Tg + 30°C of the binder particles used to the adhesive strength value of the preform produced at a molding temperature of Tg + 80°C of the binder particles used was 0.8 or more and 1.2 or less. The preform was evaluated as fair if the ratio was 0.5 or more and less than 0.8, or more than 1.2 and 1.5 or less. The preform was evaluated as bad in other cases.

<Example 1>

The Tg and complex viscoelastic coefficient G* of the binder resin composition for a preform prepared as described above according to the compounding ratio in Table 1 were measured. The adhesive strength of the binder particles produced using the binder resin composition for a preform was evaluated.

In Example 1, binder particles composed of 68% by mass of a bisphenol A epoxy resin having a Tg of 35°C and 32% by mass of a phenoxy resin having a weight-average molecular weight of 70,000 were used. In this binder resin composition for a preform, Tg = 53°C, G* = 120 at Tg + 30°C, and (G* at Tg + 30°C/G* at Tg + 80°C) = 90. The produced binder particles had no problem in storage stability and had sufficient adhesive strength in preform molding at Tg + 30°C, and further, the influence of the unevenness of the temperature during preform molding was small.

<Example 2>

In Example 2, binder particles composed of 50% by mass of a bisphenol A epoxy resin having a Tg of 35°C and 50% by mass of a phenoxy resin having a weight-average molecular weight of 70,000 were used. In this binder resin composition for a preform, Tg = 62°C, G* = 400 at Tg + 30°C, and (G* at Tg + 30°C/G* at Tg + 80°C) = 20. The produced binder particles had excellent storage stability and sufficient adhesive strength in preform molding at Tg + 30°C, and further, the influence of the unevenness of the temperature during preform molding was at an acceptable level.

<Example 3>

In Example 3, binder particles composed of 90% by mass of a bisphenol A epoxy resin having a Tg of 76°C and 10% by mass of a phenoxy resin having a weight-average molecular weight of 70,000 were used. In this binder resin composition for a preform, Tg = 79°C, G* = 180 at Tg + 30°C, and (G* at Tg + 30°C/G* at Tg + 80°C) = 150. The produced binder particles had excellent storage stability and excellent adhesive strength in preform molding at Tg + 30°C, and further, the influence of the unevenness of the temperature during preform molding was small.

<Example 4>

In Example 4, binder particles composed of 72% by mass of a bisphenol A epoxy resin having a Tg of 57°C and 28% by mass of a phenoxy resin having a weight-average molecular weight of 70,000 were used. In this binder resin composition for a preform, Tg = 75°C, G* = 300 at Tg + 30°C, and (G* at Tg + 30°C/G* at Tg + 80°C) = 100. The produced binder particles had excellent storage stability and excellent adhesive strength in preform molding at Tg + 30°C, and further, the influence of the unevenness of the temperature during preform molding was small.

<Example 5>

In Example 5, binder particles composed of 40% by mass of a liquid bisphenol A epoxy resin, 50% by mass of a bisphenol A epoxy resin having a Tg of 82°C, and 10% by mass of a phenoxy resin having a weight-average molecular weight of 70,000 were used. In this binder resin composition for a preform, Tg = 51°C, G* = 350 at Tg + 30°C, and (G* at Tg + 30°C/G* at Tg + 80°C) = 80. The produced binder particles had excellent storage stability and excellent adhesive strength in preform molding at Tg + 30°C, and further, the influence of the unevenness of the temperature during preform molding was small.

<Examples 6 to 10>

In Example 6, binder particles composed of 80% by mass of a bisphenol A epoxy resin having a Tg of 57°C and 20% by mass of a phenoxy resin having a weight-average molecular weight of 70,000 were used. In this binder resin composition for a preform, Tg = 68°C, G* = 80 at Tg + 30°C, and (G* at Tg + 30°C/G* at Tg + 80°C) = 160. The produced binder particles had excellent storage stability and excellent adhesive strength in preform molding at Tg + 30°C, and further, the influence of the unevenness of the temperature during preform molding was small.

In Example 7, binder particles composed of 80% by mass of a bisphenol A epoxy resin having a Tg of 57°C and 20% by mass of a phenoxy resin having a weight-average molecular weight of 47,500 were used. In this binder resin composition for a preform, Tg = 66°C, G* = 60 at Tg + 30°C, and (G* at Tg + 30°C/G* at Tg + 80°C) = 100. The produced binder particles had excellent storage stability and excellent adhesive strength in preform molding at Tg + 30°C, and further, the influence of the unevenness of the temperature during preform molding was small.

In Example 8, binder particles composed of 80% by mass of a bisphenol A epoxy resin having a Tg of 57°C and 20% by mass of a polyvinyl formal resin having a weight-average molecular weight of 59,000 were used. In this binder resin composition for a preform, Tg = 72°C, G* = 180 at Tg + 30°C, and (G* at Tg + 30°C/G* at Tg + 80°C) = 90. The produced binder particles had excellent storage stability and excellent adhesive strength in preform molding at Tg + 30°C, and further, the influence of the unevenness of the temperature during preform molding was small.

In Example 9, binder particles composed of 80% by mass of a bisphenol A epoxy resin having a Tg of 57°C and 20% by mass of polyether sulfone having a weight-average molecular weight of 47,000 were used. In this binder resin composition for a preform, Tg = 90°C, G* = 230 at Tg + 30°C, and (G* at Tg + 30°C/G* at Tg + 80°C) = 80. The produced binder particles had excellent storage stability and excellent adhesive strength in preform molding at Tg + 30°C, and further, the influence of the unevenness of the temperature during preform molding was small.

In Example 10, binder particles composed of 80% by mass of a bisphenol A epoxy resin having a Tg of 57°C and 20% by mass of a polyvinyl formal resin having a weight-average molecular weight of 41,000 were used. In this binder resin composition for a preform, Tg = 88°C, G* = 190 at Tg + 30°C, and (G* at Tg + 30°C/G* at Tg + 80°C) = 80. The produced binder particles had excellent storage stability and excellent adhesive strength in preform molding at Tg + 30°C, and further, the influence of the unevenness of the temperature during preform molding was small.

<Example 11>

In Example 11, binder particles composed of 75% by mass of a cresol novolac epoxy resin having a Tg of 58°C and 25% by mass of a polyvinyl pyrrolidone resin having a weight-average molecular weight of 10,500 were used. In this binder resin composition for a preform, Tg = 88°C, G* = 450 at Tg + 30°C, and (G* at Tg + 30°C/G* at Tg + 80°C) = 80. The produced binder particles had excellent storage stability and sufficient adhesive strength in preform molding at Tg + 30°C, and further, the influence of the unevenness of the temperature during preform molding was at an acceptable level.

<Examples 12 to 14>

In Example 12, binder particles composed of 85% by mass of a bisphenol A epoxy resin having a Tg of 57°C and 15% by mass of a polyvinyl pyrrolidone resin having a weight-average molecular weight of 10,500 were used. In this binder resin composition for a preform, Tg = 79°C, G* = 140 at Tg + 30°C, and (G* at Tg + 30°C/G* at Tg + 80°C) = 250. The produced binder particles had excellent storage stability and sufficient adhesive strength in preform molding at Tg + 30°C, and further, the influence of the unevenness of the temperature during preform molding was at an acceptable level.

In Example 13, binder particles composed of 90% by mass of a bisphenol A epoxy resin having a Tg of 57°C and 10% by mass of a polyvinyl pyrrolidone resin having a weight-average molecular weight of 60,000 were used. In this binder resin composition for a preform, Tg = 81°C, G* = 200 at Tg + 30°C, and (G* at Tg + 30°C/G* at Tg + 80°C) = 160. The produced binder particles had excellent storage stability and sufficient adhesive strength in preform molding at Tg + 30°C, and further, the influence of the unevenness of the temperature during preform molding was small.

In Example 14, binder particles composed of 95% by mass of a bisphenol A epoxy resin having a Tg of 57°C and 5% by mass of a polyvinyl pyrrolidone resin having a weight-average molecular weight of 1,350,000 were used. In this binder resin composition for a preform, Tg = 73°C, G* = 100 at Tg + 30°C, and (G* at Tg + 30°C/G* at Tg + 80°C) = 40. The produced binder particles had excellent storage stability and sufficient adhesive strength in preform molding at Tg + 30°C, and further, the influence of the unevenness of the temperature during preform molding was small.

<Comparative Example 1>

A binder resin composition for a preform and a preform were prepared and evaluated in the same way as in Example 1 except that the compounding ratio shown in Table 3 were used.

In Comparative Example 1, binder particles composed of 40% by mass of a bisphenol A epoxy resin having a Tg of 35°C and 60% by mass of a phenoxy resin having a weight-average molecular weight of 70,000 were used. In this binder resin composition for a preform, Tg = 74°C, G* = 1500 at Tg + 30°C, and (G* at Tg + 30°C/G* at Tg + 80°C) = 20. The produced binder particles had excellent storage stability, but did not have sufficient adhesive strength in preform molding at Tg + 30°C.

<Comparative Example 2>

In Comparative Example 2, binder particles composed of 25% by mass of a liquid bisphenol A epoxy resin, 25% by mass of a bisphenol A epoxy resin having a Tg of 35°C, and 50% by mass of a phenoxy resin having a weight-average molecular weight of 70,000 were used. In this binder resin composition for a preform, Tg = 45°C, G* = 100 at Tg + 30°C, and (G* at Tg + 30°C/G* at Tg + 80°C) = 40. The produced binder particles fused together during storage, and thus, the storage stability was insufficient.

<Comparative Example 3>

In Comparative Example 3, binder particles composed of 40% by mass of a liquid bisphenol A epoxy resin and 60% by mass of a phenoxy resin having a weight-average molecular weight of 70,000 were used. In this binder resin composition for a preform, Tg = 40°C, G* = 1200 at Tg + 30°C, and (G* at Tg + 30°C/G* at Tg + 80°C) = 30. The produced binder particles fused together during storage, and thus, the storage stability was insufficient. Further, the adhesive strength in preform molding at Tg + 30°C was insufficient.

<Comparative Example 4>

In Comparative Example 4, binder particles composed of 70% by mass of a bisphenol A epoxy resin having a Tg of 35°C, 29% by mass of a phenoxy resin having a weight-average molecular weight of 70,000, and 1% by mass of 2-ethyl-4-methyl imidazole were used. In this binder resin composition for a preform, Tg = 50°C, G* = 80 at Tg + 30°C, and (G* at Tg + 30°C/G* at Tg + 80°C) = $1.6 \times 10^{-3}$. Curing reaction of the resin in the produced binder particles proceeded during storage, and the binder particles did not melt at the preform molding temperature of Tg + 30°C.

<Comparative Example 5>

In Comparative Example 5, binder particles composed of 75% by mass of a semisolid bisphenol A epoxy resin and 25% by mass of a phenoxy resin having a Tg of 88°C were used. In this binder resin composition for a preform, Tg = 36°C, G* = 50 at Tg + 30°C, and (G* at Tg + 30°C/G* at Tg + 80°C) = 330. The produced binder particles had low adhesive strength, and the G* significantly decreased when the binder particles were heated at a high temperature, and thus, the influence of the unevenness of the temperature during preform molding was great.

<Comparative Example 6>

In Comparative Example 6, binder particles composed of 50% by mass of a bisphenol A epoxy resin having a Tg of 57°C and 50% by mass of a bisphenol A epoxy resin having a Tg of 76°C were used. In this binder resin composition for a preform, Tg = 70°C, G* = 50 at Tg + 30°C, and (G* at Tg + 30°C/G* at Tg + 80°C) = 400. The G* of the produced binder particles significantly decreased when the binder particles were heated at a high temperature, and thus, the influence of the unevenness of the temperature during preform molding was great.

<Comparative Example 7>

In Comparative Example 7, binder particles composed of 80% by mass of a bisphenol A epoxy resin having a Tg of 57°C and 20% by mass of a polyamide resin were used. In this binder resin composition for a preform, Tg = 62°C, G* = 30 at Tg + 30°C, and (G* at Tg + 30°C/G* at Tg + 80°C) = 500. In the produced binder particles, the polyamide resin did not dissolve in the epoxy resin, and the G* significantly decreased when the binder particles were heated at a high temperature, and thus, the influence of the unevenness of the temperature during preform molding was great.

[Table 1]

| | | | Example 1 | Example 2 | Example 3 | Example 4 | Example 5 | Example 6 | Example 7 |
|---|---|---|---|---|---|---|---|---|---|
| Epoxy resin | Bisphenol A epoxy resin | YD-128 | | | | | 40 | | |
| | Bisphenol A epoxy resin | jER834 | | | | | | | |
| | Bisphenol A epoxy resin | jER1001 | 68 | 50 | | | | | |
| | Bisphenol A epoxy resin | jER1004 | | | | 72 | | 80 | 80 |
| | Bisphenol A epoxy resin | jER1007 | | | 90 | | | | |
| | Bisphenol A epoxy resin | jER1010 | | | | | 50 | | |
| | Cresol novolac epoxy resin | N-695 | | | | | | | |
| Thermo-plastic resin | Phenoxy resin | YP-50 | 32 | 50 | 10 | 28 | 10 | 20 | |
| | Phenoxy resin | YP-55 | | | | | | | 20 |
| | Phenoxy resin | PKHH | | | | | | | |
| | Polyvinyl formal | Vinylec K | | | | | | | |
| | Polyether sulfone | PES5003P | | | | | | | |
| | Polyetherimide | ULTEM 1010 | | | | | | | |
| | Polyvinyl pyrrolidone | K15 | | | | | | | |
| | Polyvinyl pyrrolidone | K30 | | | | | | | |
| | Polyvinyl pyrrolidone | K90 | | | | | | | |
| | Polyamide | TR-55 | | | | | | | |
| Curing catalyst | 2-ethyl-4methyl imidazole | 2E4MZ | | | | | | | |
| | Solubility of thermoplastic resin in epoxy resin | | Soluble | Soluble | Soluble | Soluble | Soluble | Soluble | Soluble |
| Properties of binder | Tg [°C] | | 53 | 62 | 79 | 75 | 51 | 68 | 66 |
| | G* at Tg + 30°C [kPa] | | 120 | 400 | 180 | 300 | 350 | 80 | 60 |
| | G* at Tg + 30°C/G* at Tg + 80°C | | 90 | 20 | 150 | 100 | 80 | 160 | 100 |
| | Storage stability | | good | good | good | good | good | good | good |
| | Change of G* when temperature of binder resin composition for preform rises in range of 0 to 200°C | | Monotonic decrease | Monotonic decrease | Monotonic decrease | Monotonic decrease | Monotonic decrease | Monotonic decrease | Monotonic decrease |
| Properties of preform | Adhesive strength of preform obtained by molding at Tg + 30°C [N/25mm] | | 0.4 | 0.3 | 0.6 | 0.5 | 0.3 | 0.6 | 0.5 |
| | Evaluation of influence of unevenness of temperature during preform molding | | good | fair | good | good | good | good | good |
| | Adhesive strength of preform obtained by molding at Tg + 30°C/ Adhesive strength of preform obtained by molding at Tg + 80°C | | 0.8 | 0.7 | 1 | 0.9 | 0.8 | 1 | 1.1 |

[Table 2]

| | | | Example 8 | Example 9 | Example 10 | Example 11 | Example 12 | Example 13 | Example 14 |
|---|---|---|---|---|---|---|---|---|---|
| Epoxy resin | Bisphenol A epoxy resin | YD-128 | | | | | | | |
| | Bisphenol A epoxy resin | jER834 | | | | | | | |
| | Bisphenol A epoxy resin | jER1001 | | | | | | | |
| | Bisphenol A epoxy resin | jER1004 | 80 | 80 | 80 | | 85 | 90 | 95 |
| | Bisphenol A epoxy resin | jER1007 | | | | | | | |
| | Bisphenol A epoxy resin | jER1010 | | | | | | | |
| | Cresol novolac epoxy resin | N-695 | | | | 75 | | | |
| Thermo-plastic resin | Phenoxy resin | YP-50 | | | | | | | |
| | Phenoxy resin | YP-55 | | | | | | | |
| | Phenoxy resin | PKHH | | | | | | | |
| | Polyvinyl formal | Vinylec K | 20 | | | | | | |
| | Polyether sulfone | PES5003P | | 20 | | | | | |
| | Polyetherimide | ULTEM 1010 | | | 20 | | | | |
| | Polyvinyl pyrrolidone | K15 | | | | | 25 | 15 | |
| | Polyvinyl pyrrolidone | K30 | | | | | | 10 | |
| | Polyvinyl pyrrolidone | K90 | | | | | | | 5 |
| | Polyamide | TR-55 | | | | | | | |
| Curing catalyst | 2-ethyl-4methyl imidazole | 2E4MZ | | | | | | | |
| | Solubility of thermoplastic resin in epoxy resin | | Soluble | Soluble | Soluble | Soluble | Soluble | Soluble | Soluble |
| Properties of binder | Tg [°C] | | 72 | 90 | 88 | 88 | 79 | 81 | 73 |
| | G* at Tg + 30°C [kPa] | | 180 | 230 | 190 | 450 | 140 | 200 | 100 |
| | G* at Tg + 30°C/G* at Tg + 80°C | | 90 | 80 | 80 | 80 | 250 | 160 | 40 |
| | Storage stability | | good | good | good | good | good | good | good |
| | Change of G* when temperature of binder resin composition for preform rises in range of 0 to 200°C | | Monotonic decrease | Monotonic decrease | Monotonic decrease | Monotonic decrease | Monotonic decrease | Monotonic decrease | Monotonic decrease |
| Properties of preform | Adhesive strength of preform obtained by molding at Tg + 30°C [N/25mm] | | 0.5 | 0.6 | 0.6 | 0.3 | 0.3 | 0.3 | 0.3 |
| | Evaluation of influence of unevenness of temperature during preform molding | | good | good | good | fair | fair | good | good |
| | Adhesive strength of preform obtained by molding at Tg + 30°C/ Adhesive strength of preform obtained by molding at Tg + 80°C | | 1.1 | 1 | 1.1 | 0.7 | 1.4 | 1.1 | 0.8 |

## [Table 3]

| | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| Epoxy resin | Bisphenol A epoxy resin | YD-128 | | 25 | 40 | | | | |
| | Bisphenol A epoxy resin | jER834 | | | | | 75 | | |
| | Bisphenol A epoxy resin | jER1001 | 40 | 25 | | 70 | | | |
| | Bisphenol A epoxy resin | jER1004 | | | | | | 50 | 80 |
| | Bisphenol A epoxy resin | jER1007 | | | | | | 50 | |
| | Bisphenol A epoxy resin | jER1010 | | | | | | | |
| | Cresol novolac epoxy resin | N-695 | | | | | | | |
| Thermo-plastic resin | Phenoxy resin | YP-50 | 60 | 50 | 60 | 29 | | | |
| | Phenoxy resin | YP-55 | | | | | | | |
| | Phenoxy resin | PKHH | | | | | 25 | | |
| | Polyvinyl formal | Vinylec K | | | | | | | |
| | Polyether sulfone | PES5003P | | | | | | | |
| | Polyetherimide | ULTEM 1010 | | | | | | | |
| | Polyvinyl pyrrolidone | K15 | | | | | | | |
| | Polyvinyl pyrrolidone | K30 | | | | | | | |
| | Polyvinyl pyrrolidone | K90 | | | | | | | |
| | Polyamide | TR-55 | | | | | | | 20 |
| Curing catalyst | 2-ethyl-4methyl imidazole | 2E4MZ | | | | 1 | | | |
| | Solubility of thermoplastic resin in epoxy resin | | Soluble | Soluble | Soluble | Soluble | Soluble | Soluble | Insoluble |
| Properties of binder | Tg [$^{\circ}$C] | | 74 | 45 | 40 | 50 | 36 | 70 | 62 |
| | G* at Tg + 30$^{\circ}$C [kPa] | | 1500 | 100 | 1200 | 80 | 50 | 50 | 30 |
| | G* at Tg + 30$^{\circ}$C/G* at Tg + 80$^{\circ}$C | | 20 | 40 | 30 | $1.6 \times 10^{-3}$ | 330 | 400 | 500 |
| | Storage stability | | good | bad | bad | bad | bad | good | good |
| | Change of G* when temperature of binder resin composition for preform rises in range of 0 to 200$^{\circ}$C | | Monotonic decrease | Monotonic decrease | Monotonic decrease | Not monotonic decrease | Monotonic decrease | Monotonic decrease | Monotonic decrease |
| Properties of preform | Adhesive strength of preform obtained by molding at Tg + 30$^{\circ}$C [N/25mm] | | 0.1 | 0.5 | 0.2 | 0.4 | 0.2 | 0.4 | 0.2 |
| | Evaluation of influence of unevenness of temperature during preform molding | | bad | fair | bad | good | bad | bad | bad |
| | Adhesive strength of preform obtained by molding at Tg + 30$^{\circ}$C/ Adhesive strength of preform obtained by molding at Tg + 80$^{\circ}$C | | 0.2 | 0.7 | 0.2 | 0.8 | 2.5 | 4 | 5 |

**Claims**

1. A binder resin composition for a preform, having a Tg of 50°C to 100°C, a complex viscoelastic coefficient G* determined by dynamic viscoelasticity measurement of 10 kPa to 500 kPa at Tg + 30°C, and "G* at Tg + 30°C/G* at Tg + 80°C" of 10 to 300, wherein the G* monotonically decreases as temperature of the binder resin composition for a preform rises in a range of 0 to 200°C.

2. The binder resin composition for a preform according to claim 1, comprising components [A] and [B]:

    the component [A]: an epoxy resin; and
    the component [B]: a thermoplastic resin that is soluble in the component [A],
    wherein the component [A] has a Tg of 30 to 80°C.

3. The binder resin composition for a preform according to claim 2, wherein the component [A] includes a bisphenol epoxy resin having an epoxy equivalent of 500 to 3500.

4. The binder resin composition for a preform according to claim 2 or 3, wherein the component [A] has a Tg of 40 to 80°C.

5. The binder resin composition for a preform according to any of claims 2 to 4, wherein the component [B] is a phenoxy resin.

6. The binder resin composition for a preform according to any of claims 2 to 4, wherein the component [B] is one or more resins selected from polyetherimide, polysulfone, polyether sulfone, polyether ketone, polyether ether ketone, polyvinyl pyrrolidone, polyvinyl acetal, polyvinyl formal, and polyvinyl alcohol.

7. The binder resin composition for a preform according to any of claims 2 to 6, comprising 5 to 50% by mass of the component [B] in 100% by mass of the binder resin composition for a preform.

8. Binder particles comprising the binder resin composition for a preform according to any of claims 1 to 7.

9. A binder-attached reinforcing fiber base material comprising: a reinforcing fiber base material, and the binder resin composition for a preform according to any of claims 1 to 7 on at least one surface of the reinforcing fiber base material.

10. A preform comprising a laminate of the at least one binder-attached reinforcing fiber base material according to claim 9.

11. A fiber reinforced composite material comprising the preform according to claim 10 and a cured thermosetting resin.

## INTERNATIONAL SEARCH REPORT

International application No.

PCT/JP2016/085907

**A. CLASSIFICATION OF SUBJECT MATTER**
*C08L63/00*(2006.01)i, *B29B15/08*(2006.01)i, *C08J5/04*(2006.01)i, *C08L71/10*(2006.01)i, *C08L101/00*(2006.01)i, *B29K101/12*(2006.01)n, *B29K105/08*(2006.01)n

According to International Patent Classification (IPC) or to both national classification and IPC

**B. FIELDS SEARCHED**

Minimum documentation searched (classification system followed by classification symbols)
C08L63/00-63/10, B29B15/08, C08J5/04-5/10, C08L71/00-71/14, C08L101/00, C08L29/00-29/14, C08L79/00-81/10, B29K101/12, B29K105/08

Documentation searched other than minimum documentation to the extent that such documents are included in the fields searched
Jitsuyo Shinan Koho        1922-1996   Jitsuyo Shinan Toroku Koho   1996-2017
Kokai Jitsuyo Shinan Koho  1971-2017   Toroku Jitsuyo Shinan Koho   1994-2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2005-194456 A  (Toray Industries, Inc.), 21 July 2005 (21.07.2005), claims; paragraphs [0009], [0018], [0023], [0024], [0027], [0032] to [0039] (Family: none) | 1-11 |
| X A | JP 2004-514758 A  (Cytec Technology Corp.), 20 May 2004 (20.05.2004), claims; paragraphs [0024], [0040], [0041], [0046], [0050] & US 2004/0030061 A1 claims; paragraphs [0024], [0051], [0052], [0057], [0061] & WO 2002/042376 A1    & CN 1474857 A | 1-4,6-11 5 |

[×] Further documents are listed in the continuation of Box C.      [ ] See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search <br> 21 February 2017 (21.02.17) | Date of mailing of the international search report <br> 07 March 2017 (07.03.17) |
|---|---|
| Name and mailing address of the ISA/ <br> Japan Patent Office <br> 3-4-3,Kasumigaseki,Chiyoda-ku, <br> Tokyo 100-8915,Japan | Authorized officer <br><br> Telephone No. |

Form PCT/ISA/210 (second sheet) (January 2015)

**INTERNATIONAL SEARCH REPORT**

International application No.

PCT/JP2016/085907

C (Continuation).    DOCUMENTS CONSIDERED TO BE RELEVANT

| Category* | Citation of document, with indication, where appropriate, of the relevant passages | Relevant to claim No. |
|---|---|---|
| X<br>A | WO 2014/099050 A1  (Cytec Technology Corp.),<br>26 June 2014 (26.06.2014),<br>claims; page 5, line 23 to page 7, line 26;<br>page 8, lines 10 to 16; page 11, line 19 to<br>page 12, line 5<br>& JP 2016-506455 A<br>claims; paragraphs [0017] to [0023], [0028],<br>[0043] to [0045]<br>& US 2014/0179187 A1    & CN 104870558 A<br>& KR 10-2015-0097474 A | 1-4,6-11<br>5 |
| A | JP 2005-53961 A (Toray Industries, Inc.),<br>03 March 2005 (03.03.2005),<br>claims<br>(Family: none) | 1-11 |
| P,A | WO 2016/125779 A1  (Toray Industries, Inc.),<br>11 August 2016 (11.08.2016),<br>claims<br>(Family: none) | 1-11 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005194456 A
- WO 2014007288 A
- JP 2009235182 A
- WO 2013117308 A